# FASCICULE DE BREVET EUROPEEN

(11) **EP 2 142 429 B1**
(45) Date de publication et mention de la délivrance du brevet: **02.05.2012**
(21) Numéro de dépôt: 08749835.8
(22) Date de dépôt: 29.04.2008
(51) Int. Cl.: B64D 13/00, F16L 25/01, H01R 13/00

(54) **AERONEF METTANT EN OEUVRE DES DISPOSITIFS DE CONNEXION MULTI-SYSTEMES**
FLUGZEUG MIT MULTISYSTEMVERBINDUNGSVORRICHTUNGEN
AIRCRAFT USING MULTI-SYSTEM CONNECTION DEVICES

(30) Priorité: 04.05.2007 FR 0754868
(43) Date de publication de la demande: 13.01.2010
(73) Titulaire: AIRBUS OPERATIONS, 31060 Toulouse (FR)
(72) Inventeur: LE LOUARN, Amélie, 31480 LE GRES (FR); THALIN, Pascal, F-31240 Saint-Jean (FR)
(74) Mandataire: Ilgart, Jean-Christophe
(86) Numéro de dépôt international: PCT/EP2008/055223
(87) Numéro de publication internationale: WO 2008/135449

(56) Documents cités:
- EP-A- 0 337 055
- DE-A1- 3 726 778
- DE-C1- 19 916 984
- DE-U1- 29 820 933
- FR-A- 2 601 518
- US-A- 3 217 282
- US-A- 5 658 159
- US-A1- 2003 010 382
- US-A1- 2004 026 567
- US-A1- 2006 169 283
- US-A1- 2007 056 934
- US-B1- 6 398 586

## Description

### DOMAINE TECHNIQUE

L'invention concerne un aéronef mettant en oeuvre des dispositifs de connexion multi-systèmes.

Dans la suite, pour simplifier la description, on considère un aéronef de type avion.

### ÉTAT DE LA TECHNIQUE ANTÉRIEURE

Dans le cadre du développement des nouveaux avions, les compagnies aériennes demandent aux constructeurs aéronautiques de leur livrer des avions avec une cabine plus flexible. Les compagnies, en effet, souhaitent pouvoir reconfigurer l'aménagement cabine de leurs avions dans des délais de plus en plus réduits pour immobiliser le moins possible ces avions. Leur objectif est d'aboutir à une reconfiguration totale de la cabine d'un avion en zone cargo qui soit très rapide. Dans cette optique, l'idée de l'invention est d'adapter des concepts d'installation rapides entre les systèmes distribués (air, eau, électricité, oxygène...) et les ensembles (« packages ») à installer dans la cabine (cambuses (« galleys »), sièges, conteneurs, ...) pour faciliter cette flexibilité de la cabine.

Le problème technique à résoudre est de permettre l'installation de ces systèmes de manière :
- plus flexible,
- plus rapide,
- plus simple, et
- plus intégrée.

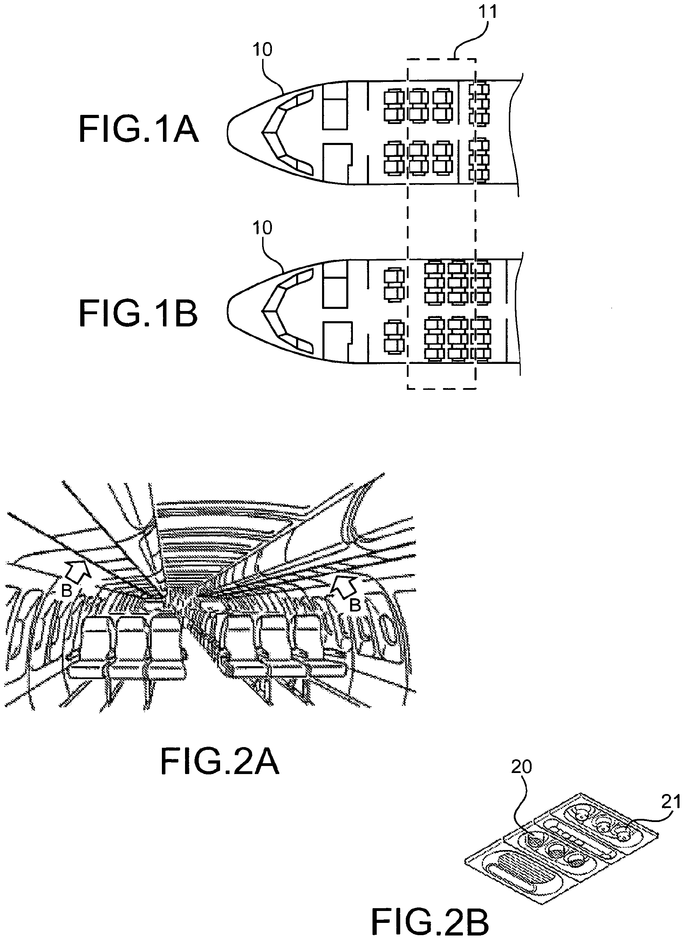

Si l'on considère un exemple de modification de l'intérieur de la cabine d'un avion comme illustré sur les figures 1A et 1B, dans lequel la configuration à l'avant de l'avion 10, dans la zone 11 a été modifiée entre la représentation de la figure 1A et celle de la figure 1B en remplaçant des séries de deux sièges par des séries de trois sièges, par exemple pour augmenter la surface allouée à la classe économique par rapport à la classe affaire. Une telle modification implique une diminution de la distance entre deux rangées de sièges successives, et donc des modifications au niveau des systèmes d'amenée d'air, d'électricité... aux passagers.

Il est donc nécessaire d'envisager des interfaces disponibles tout au long de la cabine de l'avion pour permettre toutes les configurations possibles, sans avoir à modifier les acheminements (« routings ») des différents systèmes distribués.

Dans l'exemple considéré ci-dessus d'un rapprochement des sièges, il est nécessaire de fournir de l'air pour les diffuseurs 21 et de l'électricité pour les éclairages individuels 20 et les écrans LCD (« Liquid Crystal Display » ou écran à cristaux liquides) pour chaque passager, comme illustré sur les figures 2A et 2B.

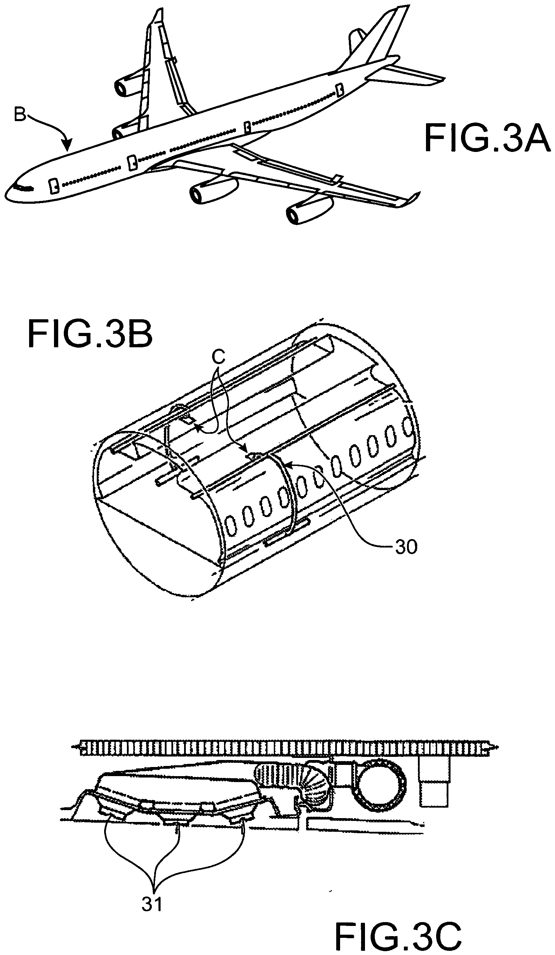

Comme illustré sur les figures 3A, 3B et 3C, le système d'arrivée d'air (tuyauterie 30) arrive au-dessus des porte-chapeaux pour se connecter au niveau des diffuseurs d'air 31.

En ce qui concerne la distribution d'électricité, il y a des connexions électriques par le sol, pour les écrans LCD par exemple installés sur les sièges, par les porte-chapeaux pour l'éclairage individuel.

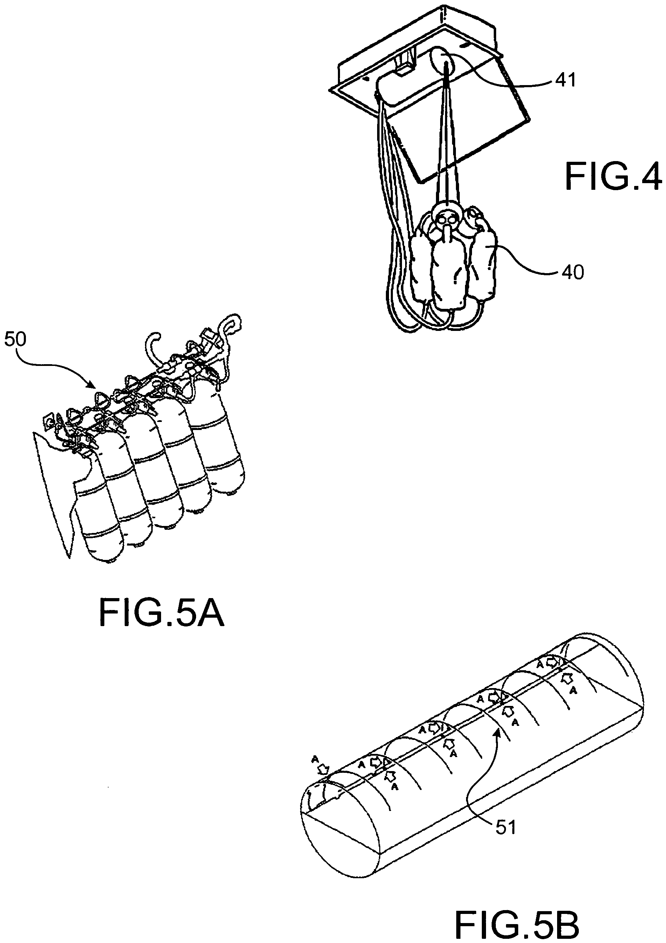

En ce qui concerne l'oxygène à fournir aux masques à oxygène en cas de dépressurisation, on peut utiliser :
- soit des cartouches pyrotechniques 41 :
   en cas de dépressurisation, comme illustré sur la figure 4, les masques à oxygène 40 tombent. Chaque passager tire d'un coup sec sur un masque 40 pour déclencher une réaction chimique à l'intérieur de la cartouche correspondante 41 qui fournit de l'oxygène.
   Dans ce cas, il est nécessaire d'amener un signal électrique pour libérer chaque masque à oxygène en cas de dépressurisation,
- soit des bouteilles d'oxygène gazeux 50 comme illustré sur la figure 5A ou des dispositifs de type « low box » : avec ces deux types d'équipements, il faut, comme illustré sur la figure 5B, redistribuer l'oxygène via des tuyauteries 51, jusqu'aux masques et par conséquent prévoir, en plus du signal électrique, des connexions pour l'oxygène au niveau de la cabine.

Dans le cas des cambuses ou « galleys » (meubles « toilettes » ou meubles « cuisine » destinés à préparer la restauration pour les passagers et contenir les chariots (« trolleys ») pour la restauration), il est nécessaire de fournir notamment de l'eau, de l'électricité, de l'air réfrigérant.

Les installations de ces différents systèmes sont indépendantes les unes des autres, avec ségrégation entre l'arrivée en air et les câbles électriques par exemple. Une fois que la compagnie a acheté l'avion, la définition des systèmes pour alimenter la cabine est figée. Toute modification de l'aménagement cabine exige un processus long et coûteux, qui nécessite ré-études, certification...

Un des problèmes techniques à résoudre par les concepteurs d'avion est donc de mettre à disposition de l'aménagement cabine des interfaces de manière assez régulière le long de la paroi interne de la cabine de l'avion pour connecter les différents systèmes en permettant une modularité de la cabine, c'est-à-dire un certain nombre de configurations d'aménagement de celle-ci. La résolution d'un tel problème technique exige donc pour l'installation des systèmes une flexibilité et des connexions rapides, simplifiées, sans risques d'erreur.

L'objet de l'invention est donc de proposer des dispositifs de connexion « multi-systèmes » permettant d'alimenter les différents systèmes de la cabine d'un avion de manière simple, rapide, flexible et fiable, sans avoir à redéfinir ni l'ensemble de l'installation, ni les différents systèmes air, eau, électricité (éclairage, signaux électriques, écrans LCD, ou oxygène, si les cartouches pyrotechniques ne sont pas utilisées).

Plus précisément l'objet de l'invention est de proposer des dispositifs de connexion utilisables par tous les systèmes à brancher par séries de sièges, qui ne perturbent pas les circuits des différents systèmes lorsqu'ils ne sont pas branchés. Ces dispositifs de connexion doivent donc rester étanches, isolés, (en fonction des systèmes : air, eau, électricité) pour ne pas créer de fuites lorsqu'un dispositif de connexion n'est pas exploité et qu'aucune tuyauterie et/ou câble n'est connecté.

On considère ci-dessous plusieurs documents de l'art antérieur.

US 2003/010382 décrit un système modulaire d'alimentation en oxygène, qui comprend au moins une ossature de module pourvue d'une plaque de base, de cadres disposés parallèlement les uns aux autres, de premières conduites de gaz destinées à l'oxygène, de deuxièmes conduites destinées à l'air dégagé de glissières d'insertion. Le système comprend aussi au moins un module isolé insérable dans l'ossature du module, et présentant au moins un récipient à tamis moléculaire fixé sur une plaque de base, avec des raccords pour gaz et un contact électrique, et une unité de préparation du gaz destinée à l'air ambiant amené ; un détendeur et une soupape à plusieurs voies, ainsi qu'un réservoir à oxygène monté en aval des récipients à tamis moléculaires montés en parallèle.

US 2006/169283 décrit un appareil pour le déploiement de masques à oxygène comprenant un système modulaire pré-emballé qui ne nécessite pas un reconditionnement manuel des masques à oxygène par les techniciens aéronautiques. Une cartouche permet une utilisation avec un collecteur traversé par un passage en communication fluide avec une source de gaz respirable. Un ensemble de masque est disposé à l'intérieur de la cartouche.

DE 3726778 décrit un accouplement embrochable adaptable de manière détachable au tuyau de dépression d'un aspirateur.

US 2004/026567 décrit un échangeur de chaleur pour réchauffer ou refroidir un fluide destiné à circuler dans un vêtement d'échange de chaleur.

US-B1-6 398 586 décrit la combinaison d'un connecteur et d'un câble blindé où une certaine distance de l'extrémité du tube d'armure du câble est dénudée pour permettre de plier l'extrémité du câble jusqu'à 80°.

US-A-5 658 159 décrit un système de connecteur, dans lequel chaque connecteur comprend un corps allongé et un écrou d'accouplement couplé de manière rotative à ce corps.

### EXPOSE DE L'INVENTION

L'invention concerne un aéronef, par exemple un avion, comprenant plusieurs dispositifs de connexion multi-systèmes, chaque dispositif comprenant une partie mâle, qui forme une prise et une partie femelle, qui forme une douille aptes à venir s'encastrer l'une dans l'autre, l'une de ces deux parties étant fixée sur une paroi de la cabine de l'aéronef l'autre étant reliée à des systèmes de la cabine, caractérisé en ce que chaque prise et chaque douille comprend :
- des premiers moyens de connexion à une alimentation en liquide et/ou en gaz de l'aéronef,
- des seconds moyens de connexion à une alimentation en électricité et/ou en signaux électriques de l'aéronef,
   en ce que chaque douille comprend :
- une première partie qui forme une embase de fixation à une paroi de la cabine, munie d'au moins une ouverture permettant une fixation à une tuyauterie de gaz ou d'eau, percée en son centre d'un orifice,
- une seconde partie qui forme une pièce cylindrique creuse solidaire de la première partie, perpendiculairement à celle-ci, de manière à ce que la partie creuse de cette pièce communique avec l'orifice de la première partie, cette seconde partie comprenant trois parties concentriques qui sont, en partant du centre, un premier manchon cylindrique apte à laisser passer un gaz ou un liquide, une première partie cylindrique de connexion électrique formant l'extrémité de premiers cables électriques et une première bague de verrouillage,
   et en ce que chaque prise comprend trois parties concentriques, qui sont, en partant du centre, un second manchon cylindrique apte à laisser passer un liquide ou un gaz, une seconde partie cylindrique de connexion électrique formant l'extrémité de seconds cables électriques, et une seconde bague de verrouillage apte à coopérer avec la première bague de verrouillage pour solidariser une prise et une douille.

Avantageusement les premiers moyens forment une canalisation centrale et les seconds moyens de connexion forment une partie cylindrique annulaire concentrique de la première.

Avantageusement la première bague de verrouillage est une bague de verrouillage de type « push-pull » ou un système de verrouillage quart de tour.

Avantageusement la pièce cylindrique creuse de la douille comprend un clapet anti-retour, qui peut utiliser une bille et un ressort.

Avantageusement un bouchon de protection permet de protéger chaque douille.

Dans un quatrième mode de réalisation, les seconds moyens de connexion comprennent des moyens de transmission de signaux hauts débits, par exemple des liaisons électriques de type quadrax ou des fibres optiques, avec un orifice central.

selon un exemple qui n'appartient pas à l'invention, chaque douille et chaque prise correspondante comprennent quatre ouvertures permettant respectivement :
- une connexion électrique,
- une connexion air,
- une connexion eau, et
- une connexion oxygène,
une ségrégation étant faite entre les deux premières connexions et les deux dernières.

L'invention concerne, également, un aéronef mettant en oeuvre des dispositifs de connexion tels que définis ci-dessus, les douilles de ces dispositifs étant accessibles sur l'habillage de la cabine.

Les dispositifs multi-systèmes selon l'invention permettent de :
- gagner du temps à l'installation et au démontage des systèmes à l'intérieur de la cabine,
- réduire les risques d'erreur ou d'oubli lors la configuration de la cabine, l'installation des systèmes étant plus simple (une seule prise étant nécessaire au lieu de deux),
- gagner du volume,
- répondre aux problèmes techniques posés par un aménagement cabine rapide et intégré et obtenir la flexibilité demandée.

### BRÈVE DESCRIPTION DES DESSINS

Les figures 1A et 1B illustrent une modification possible de la configuration cabine d'un avion.
Les figures 2A et 2B illustrent des unités de type diffuseurs d'air, éclairage, signaux sonores à la disposition des passagers d'un avion.
Les figures 3A, 3B et 3C illustrent l'implantation des diffuseurs d'air passagers à l'intérieur de la cabine d'un avion.
La figure 4 illustre une cartouche pyrotechnique avec masques à oxygène, à l'intérieur de la cabine d'un avion.
Les figures 5A et 5B illustrent des bouteilles de stockage d'oxygène gazeux ainsi que la distribution d'oxygène jusqu'aux masques passagers.
La figure 6 illustre la mise à disposition de dispositif de connexion multi-systèmes le long de l'habillage interne de la cabine d'un avion selon l'invention.
Les figures 7A, 7B et 7C illustrent des variantes de localisation des dispositifs de connexion multi-systèmes, dans une vue en coupe d'une cabine avion selon l'invention.
Les figures 8A et 8B illustrent un premier mode de réalisation du dispositif respectivement avant et après connexion, selon l'invention.
Les figures 9A à 9E illustrent les différentes caractéristiques de ce premier mode de réalisation.
Les figures 10A et 10B illustrent une vue en coupe de la douille du dispositif dans un quatrième mode de réalisation selon l'invention.
La figure 11 illustre une vue en coupe de la douille du dispositifs selon un exemple qui n'appartient pas à l'invention.

### EXPOSÉ DÉTAILLÉ DE MODES DE RÉALISATION PARTICULIERS

L'invention concerne un aéronef comprenant une cabine, sur au moins une paroi de laquelle sont fixées les premières parties de dispositifs multi-systèmes, chaque dispositif comprenant une partie mâle, ou prise, et une partie femelle, ou douille, aptes à venir s'encastrer l'une dans l'autre, l'une de ces deux parties, par exemple la douille étant apte à être fixée à l'habillage cabine de cet avion.

Chacune de ces deux parties mâle et femelle comprend :
- des premiers moyens de connexion à une alimentation en liquide, par exemple de l'eau, et/ou en gaz, par exemple de l'air ou de l'oxygène, de l'avion,
- des seconds moyens de connexion à une alimentation en électricité et/ou signaux électriques de l'avion.

L'invention permet d'installer tout le long de la cabine de l'avion les douilles de tels dispositifs multi-systèmes modulables qui permettent de connecter en même temps l'électricité, l'air, et/ou l'eau sans risques d'erreur dans l'installation. Les systèmes munis d'une prise correspondante peuvent alors se connecter sur ces différentes douilles.

Dans le cas où ces systèmes ne sont pas connectés, chaque douille est étanche (en eau, air, oxygène) ou isolée à l'aide d'un couvercle de protection (électricité) pour éviter toutes fuites et tous risques d'accident.

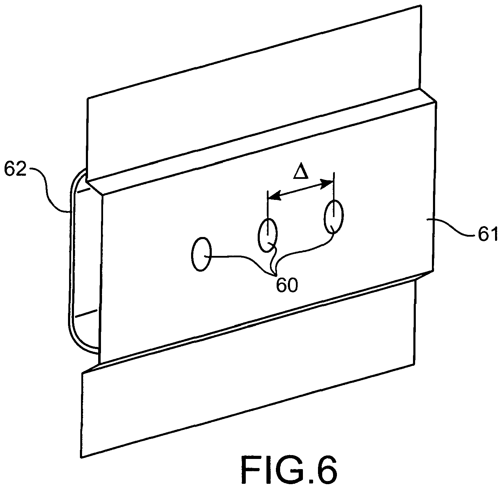

Le dispositif de l'invention permet de proposer, le long de la paroi interne de la cabine d'un avion, des douilles espacées entre elles d'un écartement donné (Δmm), chacune de ces douilles permettant de connecter les systèmes nécessaires pour une rangée de sièges par exemple. Ainsi, comme illustré sur la figure 6, les douilles peuvent être installées en des positions 60 sur une plinthe 61 sur le coté de la cabine, pour être connectées à une tuyauterie d'air 62.

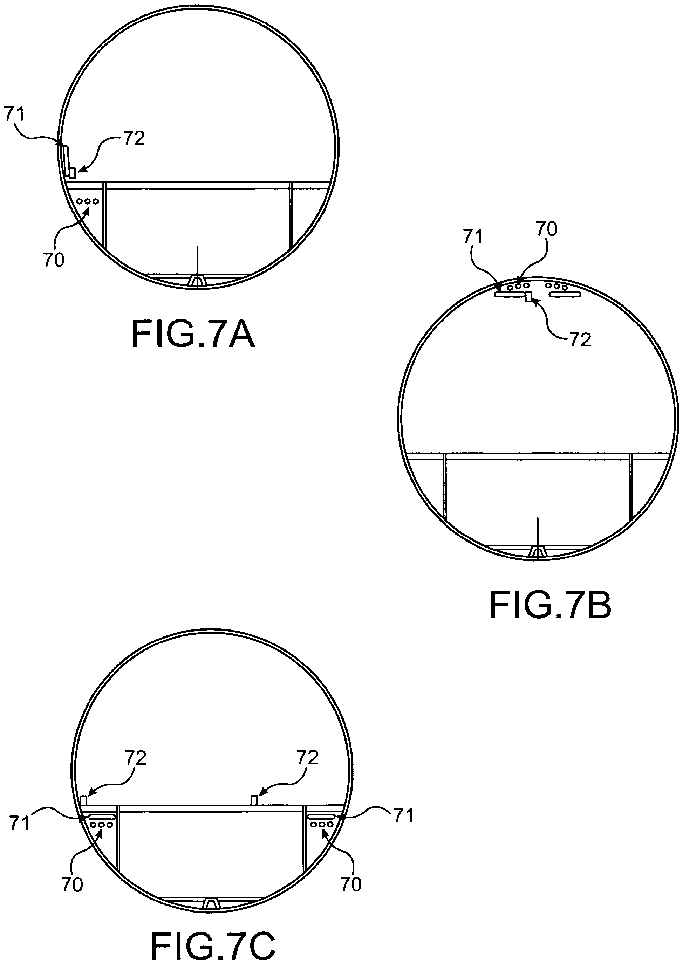

Ces douilles peuvent également être disposés en différents endroits le long de la cabine de l'avion par exemple au niveau du sol, ou au niveau du plafond en fonction de la localisation des systèmes, comme illustré sur les figures 7A, 7B et 7C. Sur ces figures sont également illustrées des routes électriques 70, une tuyauterie d'air 71 située derrière la paroi ou plinthe (figure 7A), sous le plafond (figure 7B), ou sous le plancher (figure 7C), et une douille 72.

On va considérer, ci-dessous, plusieurs modes de réalisation du dispositif de l'invention.

### Premier mode de réalisation du dispositif selon l'invention

Dans ce premier mode de réalisation, le dispositif de connexion de l'invention permet de connecter à la fois un gaz, par exemple de l'air, et l'électricité, ou des signaux électriques, qui sont deux systèmes ne nécessitant pas des ségrégations contraignantes.

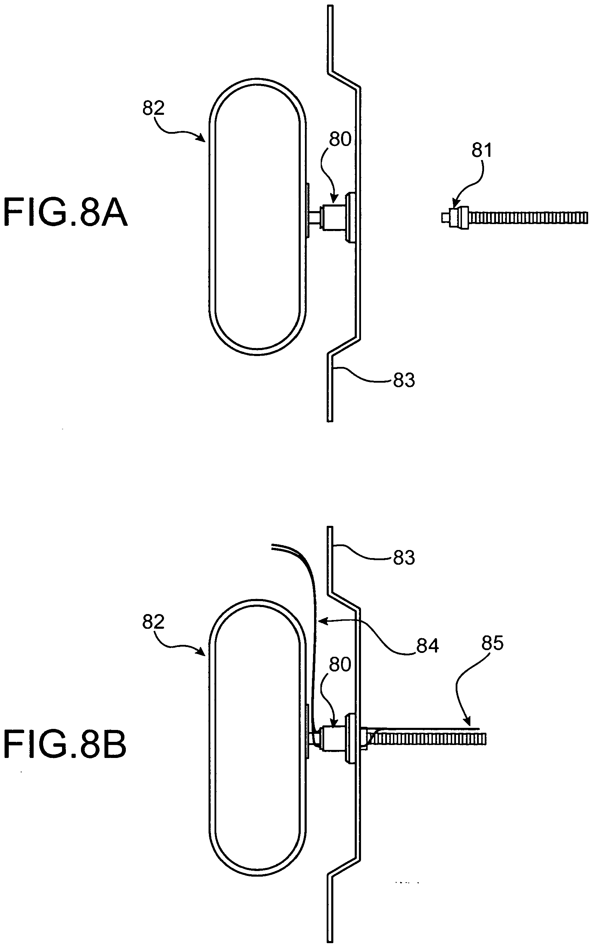

Comme illustré sur les figures 8A et 8B, le dispositif de connexion est alors composé de deux parties :
- une douille 80 qui vient se fixer entre une tuyauterie d'air 82 et l'habillement cabine 83 (plinthe) et qui reçoit des premiers câbles électriques 84,
- une prise 81 reliée à des systèmes de la cabine par l'intermédiaire notamment de seconds câbles électriques 85, apte à venir s'encastrer dans la douille 80, comme illustré sur les figures 8A et 8B, avant et après connexion de ces deux parties 80 et 81.

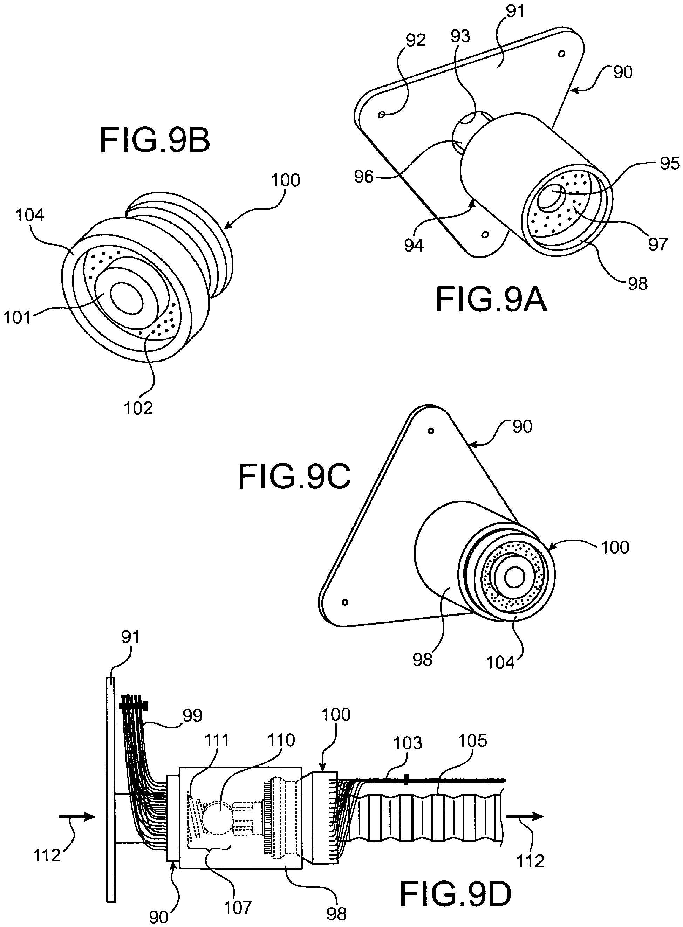

Comme illustré sur la figure 9A, une douille 90 comprend :
- une première partie 91 qui forme une embase, ici triangulaire, munie d'au moins une ouverture 92 permettant une fixation à une tuyauterie d'arrivée de gaz ou d'eau, percée en son centre d'un orifice 93,
- une seconde partie 94 qui forme une pièce cylindrique creuse solidaire de la première partie, perpendiculairement à celle-ci, de manière à ce que la partie creuse 95 de cette pièce, comprenant un clapet anti-retour 107, communique avec l'orifice 93 de la première partie.

Cette seconde partie 94 comprend trois parties concentriques qui sont, en partant du centre :
- un premier manchon cylindrique 96 apte à laisser passer un liquide ou un gaz,
- une première partie cylindrique 97 de connexion électrique formant l'extrémité de premiers câbles électriques 99,
- une première bague de verrouillage rapide 98, par exemple de type « push-pull ».

Comme illustré sur la figure 9B, une prise 10 comprend, elle aussi, trois parties concentriques, qui sont en partant du centre :
- un second manchon cylindrique 101 apte à laisser passer un liquide ou un gaz,
- une seconde partie cylindrique 102 de connexion électrique formant l'extrémité de second câbles électriques 103,
- une seconde bague de verrouillage 104 apte à coopérer avec la première bague de verrouillage 98 pour solidariser la prise 100 et la douille 90, comme illustré sur la figure 9C.

Comme illustré sur la figure 9D, le second manchon cylindrique 102 peut être avantageusement relié à un tube annelé 105 qui permet d'avoir une certaine flexibilité lors de l'installation des systèmes en cabine et aussi d'éviter de transmettre les efforts et les mouvements entre les éléments installés en cabine et la douille.

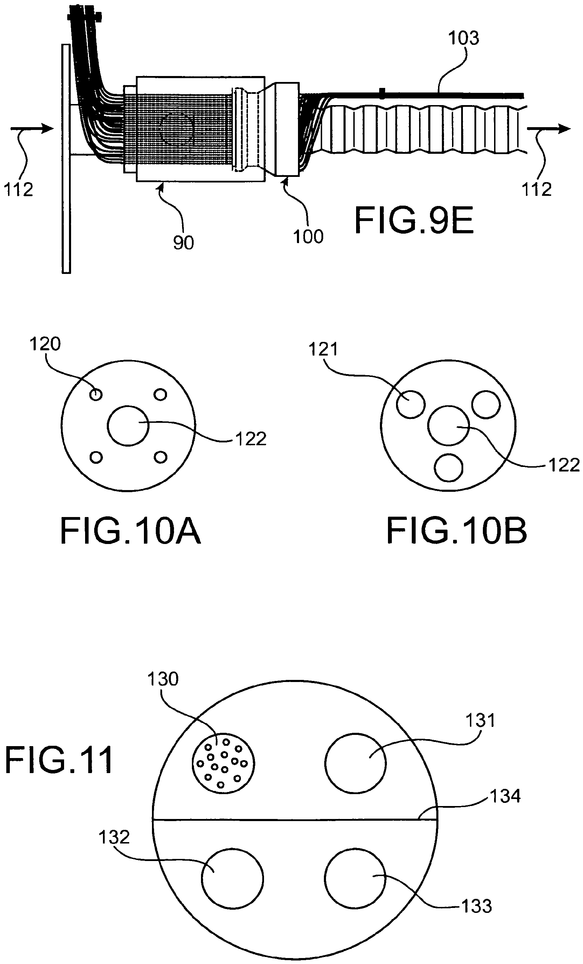

Lorsque, comme illustré sur la figure 9E, une prise 100 est connectée sur une douille 90, il y a mise en correspondante:
- des ouvertures de premier et du second manchons cylindriques 96 et 101 permettant une arrivée de gaz 112 aux systèmes connectés,
- des premières et secondes parties de connexion électrique 97 et 102 permettant de relier les seconds câbles électriques 103 des systèmes connectés aux premiers câbles électriques d'alimentation en électricité ou en signaux électriques 99.

La douille 90 peut être fixée sur une tuyauterie d'air conditionné. Les câbles électriques y sont raccordés autour de la connexion air, en prenant en compte les contraintes d'installation électriques aéronautiques, concernant par exemple le rayon de courbure.

Lorsque aucune prise 100 n'est connectée dans la douille 90, un clapet anti-retour 107 illustré sur la figure 9D (système bille 110 + ressort 111) vient obstruer la sortie de gaz et réalise l'étanchéité. En effet, lorsqu'une prise 100 vient se connecter sur la douille 90, le ressort du clapet anti-retour 107 est compressé et la bille 110 est repoussée pour laisser passer le gaz. Ce clapet anti-retour peut être un clapet sans joint pour éviter toute opération de maintenance. Dans ce mode de réalisation, le clapet anti-retour 107 utilise une bille 110 et un ressort 111 mais toute autre forme connue de l'homme du métier peut-être envisagée pour alléger le dispositif.

En ce qui concerne la connexion électrique un bouchon de protection peut être installé sur chaque douille 90 pour éviter que de la condensation n'entre dans les cavités de la douille. Ainsi, plusieurs douilles peuvent être disposées dans la cabine de l'avion pour répondre à la flexibilité de l'aménagement cabine sans risques de fuites d'air.

Ce premier mode de réalisation présente les avantages suivantes :
- Il permet de connecter en même temps deux systèmes : gaz + électricité (et/ou signaux électriques).
- Il utilise un seul système de verrouillage pour deux connexions.
- Il n'y a pas de risques d'erreur ou d'oubli de connexion ; une seule prise étant utilisée pour plusieurs systèmes.
- L'étanchéité est assurée pour les deux systèmes (air, électricité) que ce soit en mode connecté ou en mode déconnecté.

### Deuxième mode de réalisation du dispositif selon l'invention

Dans le premier mode de réalisation, le dispositif de connexion multi-systèmes permet de réaliser des connexions de gaz et d'électricité à des systèmes. Mais on peut également envisager de connecter d'autres systèmes en permettant une modularité au niveau de la connexion liquide/électricité. Ce deuxième mode de réalisation, permet de réaliser également une connexion en eau, pour l'application aux « galleys » par exemple.

Dans ce second mode de réalisation la douille 90 et la prise 100 correspondantes présentent une connexion liquide au centre et une connexion électrique modulable à la périphérie, que l'on peut ou non enlever en fonction des besoins. En effet, pour des raisons de ségrégations entre systèmes, on peut ne pas laisser la connectique électrique autour de la connexion eau.

L'avantage de ce second mode de réalisation est de permettre de développer un même dispositif de connexion multi-systèmes modulable qui permette de connecter plusieurs systèmes et qui corresponde par ailleurs aux normes aéronautiques existantes.

### Troisième mode de réalisation du dispositif selon l'invention

Dans ce troisième mode de réalisation de l'invention, on remplace la bague à verrouillage rapide de type « Push-Pull » par un système de verrouillage rapide à quart de tour, appelé « Quickdisconnect ».

Dans le cas d'un tel système de verrouillage, le mouvement de verrouillage de la bague consiste en une rotation autour de l'axe central contrairement au verrouillage de type « Push-Pull », où le mouvement se fait de manière axiale, le long de la bague. Ce verrouillage à quart de tour présente l'intérêt d'un dispositif de verrouillage moins encombrant.

### Quatrième mode de réalisation du dispositif selon l'invention

Dans ce quatrième mode de réalisation de l'invention, on utilise des connexions électriques permettant la transmission de signaux haut débit pour les réseaux « Ethernet ».

Comme représenté sur les figures 10A et 10B on peut respectivement utiliser des liaisons électriques de type « quadrax » 120 ou des liaisons à fibres optiques 121, avec un orifice central 122.

Exemple n'appartient pas à l'invention. Selon cet exemple , comme illustré sur la figure 11, on utilise un dispositif de connexion multi-systèmes dont les différentes parties ne sont pas concentriques.

Chaque douille et chaque prise correspondante comprennent quatre ouvertures 130, 131, 132 et 133 permettant respectivement :
- une connexion électrique,
- une connexion air,
- une connexion eau, et
- une connexion oxygène,
une ségrégation 134 étant faite entre les deux premières connexions et les deux dernières.

Un tel mode de réalisation présente donc l'avantage de permettre d'intégrer des principes de ségrégation entre les différents systèmes.

## Revendications

1. Aéronef comprenant plusieurs dispositifs de connexion multi-systèmes, chaque dispositif comprenant une partie mâle, qui forme une prise (81 ; 100) et une partie femelle, qui forme une douille (80 ; 90) aptes à venir s'encastrer l'une dans l'autre, l'une de ces deux parties étant fixée sur une paroi de la cabine de l'aéronef l'autre étant reliée à des systèmes de la cabine, **caractérisé en ce que** chaque prise (81 ; 100) et chaque douille (80 ; 90) comprend :
- des premiers moyens de connexion à une alimentation en liquide et/ou en gaz de l'aéronef,
- des seconds moyens de connexion à une alimentation en électricité et/ou en signaux électriques de l'aéronef,
**en ce que** chaque douille (90) comprend :
- une première partie (91) qui forme une embase de fixation à une paroi de la cabine, munie d'au moins une ouverture (92) permettant une fixation à une tuyauterie de gaz ou d'eau, percée en son centre d'un orifice (93),
- une seconde partie (94) qui forme une pièce cylindrique creuse solidaire de la première partie (91), perpendiculairement à celle-ci, de manière à ce que la partie creuse (95) de cette pièce communique avec l'orifice (93) de la première partie, cette seconde partie comprenant trois parties concentriques qui sont, en partant du centre, un premier manchon cylindrique (96) apte à laisser passer un gaz ou un liquide, une première partie cylindrique (97) de connexion électrique formant l'extrémité de premiers cables électriques (99) et une première bague de verrouillage (98),
et **en ce que** chaque prise (100) comprend trois parties concentriques, qui sont, en partant du centre, un second manchon cylindrique (101) apte à laisser passer un liquide ou un gaz, une seconde partie cylindrique (102) de connexion électrique formant l'extrémité de seconds cables électriques, et une seconde bague de verrouillage (104) apte à coopérer avec la première bague de verrouillage (98) pour solidariser une prise (100) et une douille (90).

2. Aéronef selon la revendication 2, dans lequel les premiers moyens de connexion forment une canalisation centrale et dans lequel les seconds moyens de connexion forment une partie annulaire concentrique de la première.

3. Aéronef selon la revendication 1, dans lequel la première bague de verrouillage (98) est une bague de verrouillage de type « push-pull » ou un système de verrouillage quart de tour.

4. Aéronef selon la revendication 1, dans lequel la partie creuse (95) de la seconde partie (94) comprend un clapet anti-retour.

5. Aéronef selon la revendication 1, les seconds moyens de connexion comprennent des moyens de transmission de signaux hauts débits.

6. Aéronef selon l'une quelconque des revendications 1 à 5, dans lequel les douilles (80 ; 90) de ces dispositifs sont accessibles sur l'habillage de la cabine.

## Claims

1. An aircraft comprising several multisystem connection devices, each device comprising a male portion which forms a plug (81; 100) and a female portion which forms a socket (80; 90), capable of fitting into each other, one of the two portions being attached onto a wall of the cabin of the aircraft, the other being connected to systems of the cabin, **characterized in that** each plug (81; 100) and each socket (80; 90) comprises:
- first means for connection to a liquid and/or gas supply of the aircraft,
- second means for connecting to a supply of electricity and/or electric signals of the aircraft,
**in that** each socket (90) comprises:
- a first portion (91) which forms a base for attachment to a wall of the cabin, provided with at least one aperture (92) allowing attachment to a gas or water pipe, pierced in its center with an orifice (93),
- a second portion (94) which forms a hollow cylindrical part firmly secured to the first portion (91), perpendicularly to the latter, so that the hollow portion (95) of this part communicates with the orifice (93) of the first portion, this second portion comprising three concentric portions which are, from the center, a first cylindrical sleeve (96) able to let through a gas or a liquid, a first electric connection cylindrical portion (97) forming the end of first electric cables (99) and a first locking ring (98),
and **in that** each plug (100) comprises three concentric portions, which are, from the center, a second cylindrical sleeve (101) able to let through a gas or a liquid, a second electric connection cylindrical portion (102) forming the end of second electric cables and a second locking ring (104), capable of cooperating with the first locking ring (98) for firmly securing a plug (100) and a socket (90).

2. The aircraft according to claim 1, wherein the first connection means form a central duct and wherein the second means form an annular portion concentric with the first.

3. The aircraft according to claim 1, wherein the first locking ring (98) is a locking ring of the push-pull type or a quarter turn locking system.

4. The aircraft according to claim 1, wherein the hollow portion (95) of the second portion (94) comprises an anti-return valve.

5. The aircraft according to claim 1, the second connection means comprising means for transmitting high throughput signals.

6. The aircraft according to any of claims 1 to 5, wherein the sockets (80; 90) of these devices are accessible on the fittings of the cabin.

## Patentansprüche

1. Luftfahrzeug mit mehreren Multisystemverbindungsvorrichtungen, wobei jede Vorrichtung ein Vaterteil, das einen Stecker bzw. ein Anschlußstück bildet (81, 100), und ein Mutterteil, das eine Fassung bildet (80, 90), die ineinander gefügt werden können, umfasst, wobei das eine dieser beiden Teile an einer Kabinenwand des Luftfahrzeugs befestigt ist und das andere mit Systemen der Kabine verbunden ist,
**dadurch gekennzeichnet, dass** jedes Anschlussstück (81, 100) und jede Fassung (80, 90)
- erste Mittel zur Verbindung des Luftfahrzeugs mit einer Flüssigkeit- und/oder Gasversorgung,
- zweite Mittel zur Verbindung des Luftfahrzeugs mit einer Stromversorgung und/oder Versorgung mit elektrischen Signalen umfasst,
dass jede Fassung (90)
- ein erstes Teil (91), das ein Ansatzstück zur Befestigung an einer Kabinenwand bildet, das mit mindestens einem Loch (92) ausgestattet ist, das eine Befestigung an einer Gas- oder Wasserrahrleitung ermöglicht, wobei das erste Teil in dessen Mitte von einer Öffnung (93) durchbrechen ist,
- ein zweites Teil (94), das ein hohles zylindrisches Stück bildet, das mit dem ersten Teil (91) senkrecht zu diesem derart schlüssig verbunden ist, dass der hohle Bereich (95) dieses Teils mit der Öffnung (93) des ersten Teils kommuniziert, wobei dieses zweite Teil drei konzentrische Teile umfasst, die, ausgehend von der Mitte, eine erste zylindrische Muffe (96), durch die ein Gas oder eine Flüssigkeit hindurchströmen kann, ein erstes zylindrisches Teil (97) zur elektrischen Verbindung, das das Ende von ersten Stromkabeln (99) bildet, und ein erster Verriegelungsring (98) sind, umfasst,
und dass jedes Anschlussstück (100) drei konzentrische Teile umfasst, die, ausgehend von der Mitte, eine zweite zylindrische Muffe (101), durch die eine Flüssigkeit oder ein Gas hindurchströmen kann, ein zweites zylindrisches Teil (102) zar elektrischen Verbindung, das das Ende von zweiten Stromkabeln bildet, und ein zweiter Verriegelungsring (104), der mit dem ersten Verriegelungsring (98) zur schlüssige Verbindung von einem Anschlussstück (100) und einer Fassung (90) zusammenwirken kann, sind, umfasst.

2. Luftfahrzeug nach Anspruch 1, wobei die ersten Mittel zur Verbindung einen zentralen Kanal bilden und wobei die zweiten Mittel zur Verbindung ein um das erste konzentrisches, ringförmiges Teil bilden.

3. Luftfahrzeug nach Anspruch 1, wobei der erste Verriegelungsring (98) ein Verriegelungsring des Typs "Push-Puls" oder ein Vierteldrehung-Verriegelungsring ist.

4. Luftfahrzeug nach Anspruch 1, wobei der hohle Bereich (95) des zweiten Teils (94) ein Rückschlagventil aufweist.

5. Luftfahrzeug nach Anspruch 1, wobei die zweiten Mittel zur Verbindung Mittel zur Übertragung von Signalen hoher Rate umfassen.

6. Luftfahrzeug nach einem der Ansprüche 1 bis 5, wobei die Passungen (80, 90) dieser Vorrichtungen an der Kabinenverkleidung zugänglich sind.
